# EUROPEAN PATENT SPECIFICATION

(11) **EP 4 003 604 B1**
(45) Date of publication and mention of the grant of the patent: **21.06.2023**
(21) Application number: 20740633.1
(22) Date of filing: 20.07.2020
(51) Int. Cl.: B05B 3/10, A01M 7/00

(54) **DISC FOR SPRAY UNIT**
SCHEIBE FÜR SPRÜHEINHEIT
DISQUE POUR UNITÉ DE PULVÉRISATION

(30) Priority: 25.07.2019 EP 19188229
(43) Date of publication of application: 01.06.2022
(73) Proprietor: Bayer Aktiengesellschaft, 51373 Leverkusen (DE)
(72) Inventor: FAERS, Malcolm, 40597 Düsseldorf (DE); CHAPPLE, Andrew, Charles, 40764 Langenfeld (DE)
(74) Representative: BIP Patents
(86) International application number: PCT/EP2020/070440
(87) International publication number: WO 2021/013789

(56) References cited:
- EP-A2- 0 112 296
- FR-A1- 2 868 707
- KR-A- 20180 133 819
- US-A1- 2013 172 830
- US-B2- 9 616 442

## Description

### FIELD OF THE INVENTION

The present invention relates to a disc for a spray unit, to a spray unit having such a disc, to a vehicle having at least one disc, and to a vehicle having such a spray unit.

### BACKGROUND OF THE INVENTION

The general background of this invention is the application of herbicides and pesticides to crops. The spray liquid must be atomised. This is typically done using hydraulic nozzles. A more sophisticated approach is to use spinning discs. FR2868707A1 discloses a spray dispenser provided with a rotary disc. US9616442B2 discloses a rotating disk atomizer. When a vehicle spraying the herbicide/pesticide is a drone or unmanned aerial vehicle (UAV), the dedicated spray technology needs to be carefully considered because it adds weight and has energy requirements. As such spinning discs have the potential to be effective atomisation systems for drone applications. This is because they have a general low energy requirement for generating droplets, and other components are compatible with battery-powered drones.

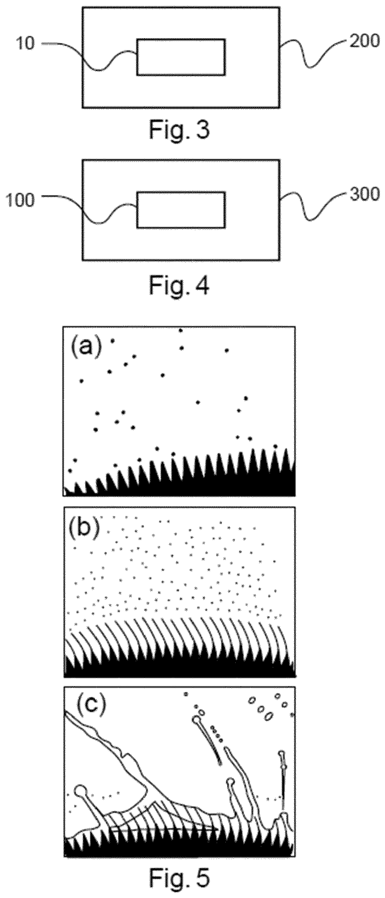

In general, spinning disc atomisers have three modes of droplet formation:
1. if the disc is partially loaded, drops are formed individually at the edge of the disc, typically at teeth or serrations normally set into the periphery of the disc, as shown in Fig. 5a;
2. if the disc is loaded close to capacity, ligaments are formed, from which drops are formed along with their satellites, resulting in a bimodal (or broader) distribution of drop sizes, as shown in Fig. 5b; and
3. if the disc is overloaded, liquid leaves the disc in sheets and atomisation is closer to that of hydraulic nozzles, with a wide distribution of drop sizes and with an increased proportion of smaller droplets than the two previous modes of droplet formation, as shown in Fig. 5c.

Ideally, products should be applied using only the first atomisation process discussed at 1 above. This ensures control over drop size and minimises the formation of fine droplets and/or a wide distribution of droplet sizes. However, this is not easy to accomplish, because the disc diameter, rotational speed or revolutions per minutes (RPM), and the formulation surface tension all tend to influence the atomisation process. Thus, a required droplet size may not be achievable for a required application rate, leading to one or more of: a too broad distribution of droplet sizes, an incorrect application rate, and application at an energy requirement that is too high for sustained operation via a drone. It is to be noted that the problems of a too broad distribution of droplet sizes and an incorrect application rate apply equally to a land based sprayer.

There is a need to address one or more of these problems.

### SUMMARY OF THE INVENTION

It would be advantageous to have improved means for the spraying of liquids such as those containing fertilizers, herbicides and pesticides, such as insecticides.

The object of the present invention is solved with the subject matter of the independent claim, wherein further embodiments are incorporated in the dependent claims. It should be noted that the following described aspects and examples of the invention apply also for the spray unit, the vehicle having one or more spray unit.

In a first aspect according to the invention, there is provided a disc for a spinning liquid disc atomizer. A surface of the disc comprises a plurality of concentric rings having different radii centred on the centre of the disc. A first concentric ring of an adjacent pair of concentric rings has a surface configured to exhibit a first level of adhesion to the liquid and a second concentric ring of the adjacent pair of concentric rings has a surface configured to exhibit a second level of adhesion to the liquid. The first level of adhesion is less than the second level of adhesion.

In this manner, a disc is provided for a spinning disk liquid atomiser or liquid spray unit, where control of the droplet spectra is provided through changing how the liquid interacts with the surface of the disc as it transits across that surface. This leads to an ability to control the way the liquid breaks up either on the disc or at the periphery of the disc that is different to the normal control effected through rotational speed and/or the flow rate of liquid applied to the spinning disc.

This surface structure leads to the breakup of liquid across the surface into larger and smaller droplets, and where the larger droplets then move faster than smaller droplets. The larger droplets then tend to coalesce with the smaller droplets leading to a more uniform droplet spectra.

Furthermore, the liquid arrives at the edge of the disc in waves, leading to increased loading to the edge of the disc and resulting in larger droplet emission sizes, that are less susceptible to drift caused by air movement, and that can be appropriately sized for transmission of an active ingredient to the plant and/or to an insect/pest on the plant.

Thus, a required droplet size can be provided for a required flow rate, and additionally the droplet size distribution, centred around the required droplet size, can be made narrower.

In this manner, the correct application of active ingredient per plant per unit area of land can be provided, with a droplet size that is sized appropriately for application and/or sized appropriately to mitigate drift of droplets caused by air movement.

In an embodiment, the surface of the disc comprises a centre disc area, wherein a maximum radius of the centre disc area is less than a minimum radius of the plurality of concentric rings.

In an embodiment, the centre disc area has a surface configured to exhibit the second level of adhesion to the liquid.

In this way, it has been found that this helps to maximise the transfer of momentum to the liquid to be sprayed.

In an embodiment, the first concentric ring is adjacent to the centre disc area.

In an embodiment, the plurality of concentric rings comprises three or more concentric rings. The level of adhesion alternates between the first level and second level of adhesion for adjacent concentric rings progressing in an outwards direction.

In an embodiment, a concentric ring adjacent to an outer edge of the disc has a surface configured to exhibit the second level of adhesion to the liquid.

In an embodiment, the first level of adhesion is provided by a hydrophobic surface.

In an embodiment, the second level of adhesion is provided by a hydrophilic surface.

In an embodiment, the first level of adhesion is provided by a surface that is intentionally textured.

In an embodiment, the second level of adhesion is provided by a surface that is intentionally textured.

In an embodiment, an outer edge of the disc comprises serrations.

In a second aspect, there is provided a spray unit, comprising:
- an axle;
- a disc according to the first aspect; and
- a liquid applicator.

The disc is configured to spin about the axle centred on the centre of the disc. The liquid applicator is configured to apply liquid to a surface of the disc.

In a third aspect, there is provided a spray vehicle, comprising at least one disc according to the first aspect.

In a fourth aspect, there is provided a spray vehicle, comprising at least one spray unit according to the second aspect.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows schematic setup of an example of a newly developed disc for a spinning liquid disc atomizer;
Fig. 2 shows a schematic setup of an example of a newly developed spray unit;
Fig. 3 shows a schematic setup of an example of a spray vehicle with at least one newly developed disc;
Fig. 4 shows a schematic setup of an example of a spray vehicle with at least one newly developed spray unit;
Fig. 5a, 5b and 5c show examples of spray droplet distributions from examples of one or more existing discs;
Fig. 6 shows a schematic example of a newly developed disc for a spray unit;
Fig. 7 shows a schematic example of a newly developed disc for a spray unit;
Fig. 8 shows an example of spray droplet distribution from an example an existing disc;
Fig. 9 shows schematic setup of an example of a newly developed disc for a spray unit; and
Fig. 10 shows schematic examples of droplet movement across a surface of a newly developed disc for a spray unit.

### DETAILED DESCRIPTION OF EMBODIMENTS

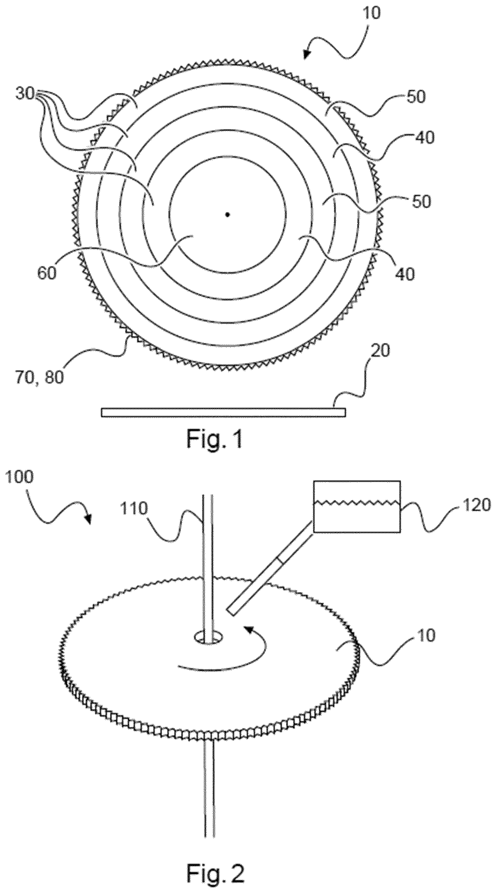

Fig. 1 shows an example of a disc 10 for a spinning disc liquid atomizer. A surface 20 of the disc comprises a plurality of concentric rings 30 having different radii centred on the centre of the disc. A first concentric ring 40 of an adjacent pair of concentric rings has a surface configured to exhibit a first level of adhesion to the liquid and a second concentric ring 50 of the adjacent pair of concentric rings has a surface configured to exhibit a second level of adhesion to the liquid. The first level of adhesion is less than the second level of adhesion.

In this manner, a disc is provided for a spinning disk liquid atomiser or liquid spray unit, where control of the droplet spectra is provided through changing how the liquid interacts with the surface of the disc as it transits across that surface. This leads to an ability to control the way the liquid breaks up either on or at the periphery of the disc that is different to the normal control effected through rotational speed and/or the flow rate of liquid applied to the spinning disc.

This surface structure leads to the breakup of liquid across the surface into larger and smaller droplets, and where the larger droplets then move faster than smaller droplets. The larger droplets then tend to coalesce with the smaller droplets leading to a more uniform droplet spectra.

Furthermore, the liquid arrives at the edge of the disc in waves, leading to increased loading to the edge of the disc and resulting in larger required droplet emission sizes.

Thus, a required droplet size can be provided for a required flow rate, and additionally the droplet size distribution centred around the required droplet size can be made narrower.

In this manner, the correct application of active ingredient per plat per unit area of land can be provided, with a droplet size that is sized appropriately for application and/or sized appropriately to mitigate drift of droplets caused by air movement.

In an example, the first concentric ring 40 of the adjacent pair of concentric rings is contiguous with the second concentric ring 50 of the adjacent pair of concentric rings.

According to an embodiment, the surface of the disc comprises a centre disc area 60 centred on the axle. A maximum radius of the centre disc area is less than a minimum radius of the plurality of concentric rings that are themselves centred on the axle.

According to an embodiment, the centre disc area has a surface configured to exhibit the second level of adhesion to the liquid.

In this way, it has been found that this helps to maximise the transfer of momentum to the liquid to be sprayed.

According to an embodiment, the first concentric ring is adjacent to the centre disc area.

In an embodiment, the first concentric ring is contiguous with the centre disc area.

According to an embodiment, the plurality of concentric rings comprises three or more concentric rings. The level of adhesion alternates between the first level and second level of adhesion for adjacent concentric rings progressing in an outwards direction.

In an example, adjacent concentric rings are contiguous with one another.

According to an embodiment, a concentric ring adjacent to an outer edge of the disc has a surface configured to exhibit the second level of adhesion to the liquid.

In an example, the concentric ring adjacent to the outer edge is contiguous with the outer edge.

According to an embodiment, the first level of adhesion is provided by a hydrophobic surface.

According to an embodiment, the second level of adhesion is provided by a hydrophilic surface.

According to an embodiment, the first level of adhesion is provided by a surface that is intentionally textured.

According to an embodiment, the second level of adhesion is provided by a surface that is intentionally textured.

According to an embodiment, an outer edge 70 of the disc comprises serrations 80.

Fig. 2 shows an example of a spray unit 100. The spray unit comprises an axle 110, and a disc 10 as described with respect to Fig. 1. The spray unit also comprises a liquid applicator 120. The disc is configured to spin about the axle centred on the centre of the disc. The liquid applicator is configured to apply liquid to a surface of the disc.

Fig. 3 shows an example of a spray vehicle 200. The spray vehicle comprises at least one disc 10 as described with respect to Fig. 1.

In an example, the vehicle is a drone or UAV.

In an example, the vehicle is a land vehicle.

Fig. 4 shows an example of a spray vehicle 300. The spray vehicle comprises at least one spray unit 100 as described with respect to Fig. 2.

In an example, the vehicle is a drone or UAV.

In an example, the vehicle is a land vehicle.

In an example, the vehicle 300 is the same as vehicle 200. However, in some situations a manufacturer can make vehicle 200 that does not have a liquid applicator 120. For example, in some situations a liquid applicator can be subsequently fitted to the vehicle. Thus, a vehicle can be manufactured as vehicle 200, and then can become vehicle 300 when a liquid applicator is added.

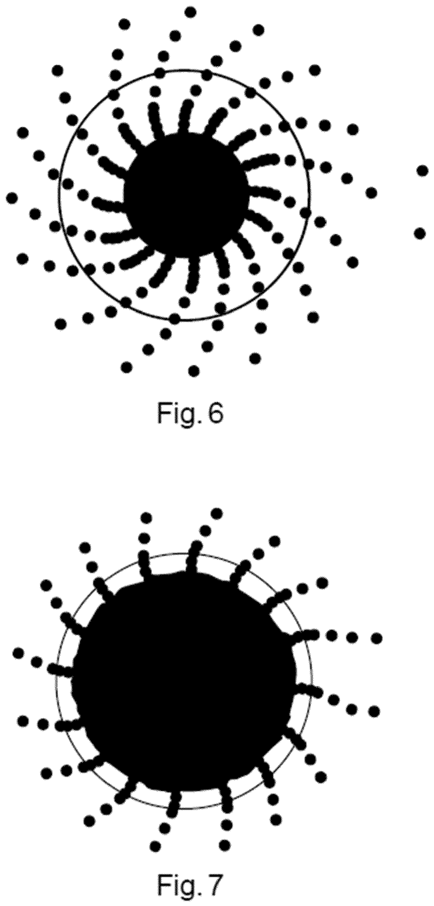

The disc for spray unit, spray unit having such a disc, vehicle having at least one disc, vehicle having such a spray unit are now described in more detail with respect to specific embodiments, where reference is made to Figs. 6-10, where applicability can be for boom sprayers, UAVs, Unmanned Ground Vehicles (UGV), robotics platforms and backpack sprayers.

Fig. 6 shows an example of a newly developed disc for a spray unit. The new disc provides for improved droplet atomization through in effect adding another dimension to the atomisation process, namely altering the adhesive properties of the disc, such that the liquid will interact with the disc in different ways at different places on the disc. This alters the way that the liquid breaks up on the disc (partial loading) and/or alters the way that the liquid is presented to the atomisation point (close to maximum loading of disc). This is achieved by the use of, for example, concentric rings of surfaces that alternate between high adhesion with low slip and low adhesion with high slip. This is explained in detail below, but in brief, the central section of the disc contains an area of high adhesion to maximise the transfer of momentum to the spray liquid. This area will also smooth out any variability in the loading of the disc, in a sense mixing and averaging the load. The outer section of the disc contains a series of concentric rings that alternate between high and low adhesion. Assuming that the loading to the disc is relatively low, as depicted in Fig. 6, then as the ligaments of the spray liquid break up into droplets, the droplets will start to separate depending on their size, with the result that the larger droplets will move faster, and will coalesce with any smaller drops produced. A more uniform droplet spectra will result, with the droplets having a more uniform size with less of a spread in sizes. However, as shown in Fig. 7 in the case of near optimal loading of the disc with a high adhesive outermost ring, the liquid presented to the edge of the disc will be arriving in waves. Thus, a higher loading to the edge of the disc can be obtained resulting in larger drops with less variation is droplet size.

The disc surface adhesive properties can be altered in 2-dimensions, or structures can be built up to increase the surface area of the disc. Today, this is typically done using grooves in the disc, or by turning the disc into a cone. However, comb-like structures can be constructed across the surface in place of or augmenting the rings. In this day and age of 3D printing, it is a simple matter to print discs of different plastics and /or surface structures. In 2-dimensions (2D) there are two regimes that can be utilised, smooth and micro-textured surfaces where a surface roughness exists on the micro or nano scale (typically 0.1 mm to 10 nm). In both cases, the surface can be varied between hydrophobic and hydrophilic by changing the surface chemistry. For smooth surfaces, the surface adhesion of a spray liquid (either as a film, ligament or drop) can be changed in this way. For an aqueous liquid, a hydrophilic surface will have a higher adhesion with lower slip, while a hydrophobic surface will have a lower adhesion with higher slip (and vice versa for an oil). However, for smooth surfaces the range of adhesions accessible is not high (as seen by the narrow contact angle range). This range of adhesions (and contact angles) is significantly expanded for micro-textured surfaces, with the result that greater control of the atomisation process is possible (More details are presented in the paper by Bico et al, Wetting of textured surfaces, Colloids and Surfaces A 206 (2002) 41-16).

An example of the benefit of micro-textured surfaces is in concentric rings on a disc as described here. With a smooth surface the effect from concentric rings of high and low adhesion is smaller resulting in a weaker effect on the atomisation process. With a micro-textured surface the effect from concentric rings is greater for regions of high and low adhesion, resulting in an enhanced effect on the atomisation process.

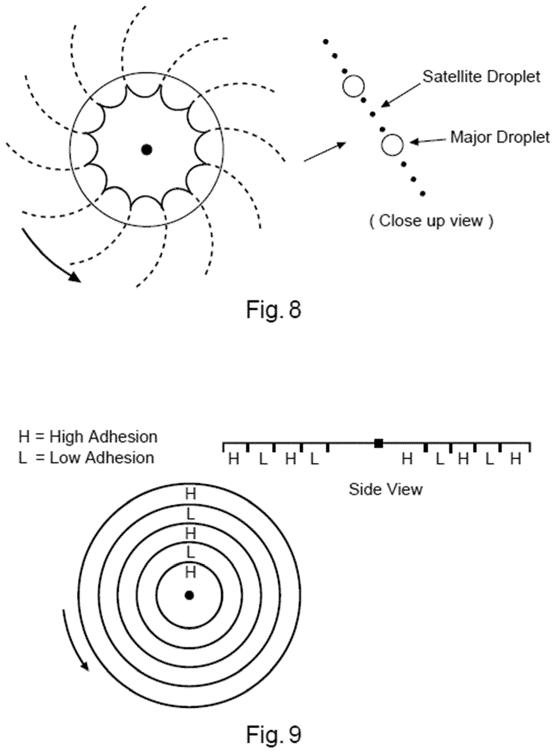

Fig. 8 shows an example of spray droplet distribution from an example an existing disc. Here, as discussed above, due to a disc having a uniform surface droplets form through the break-up of ligaments. This has a disadvantage that satellite droplets, with a smaller size than major droplets, are formed. These smaller droplets are more susceptible to unwanted drift due to air movement.

Fig. 9 shows an example of the newly developed disc for a spray unit. Here, the formation of satellite droplets is mitigated through the use of concentric rings of surfaces that alternate between high adhesion with low slip and low adhesion with high slip. The central section of the disc has an area of high adhesion to maximize the transfer of momentum to the liquid to be sprayed. The outer section of the disc has a series of concentric rings that alternate between low and high adhesion. As the ligaments of the spray liquid break up into droplets, the larger droplets travel at different speeds to the smaller droplets due to the differences in slip between the rings for droplets of different sizes. The result is that the larger droplets catch up with, and coalesce with, the smaller droplets, resulting in a more uniform droplet size with less distribution in sizes, with the spray droplets being centred around a set large size that suffers less from drift.

As discussed above, the surface adhesion can be varied by the use of hydrophilic and hydrophobic regions. Alternately or additionally the surface adhesion can be varied by the use of micro-scale or nano-scale structures.

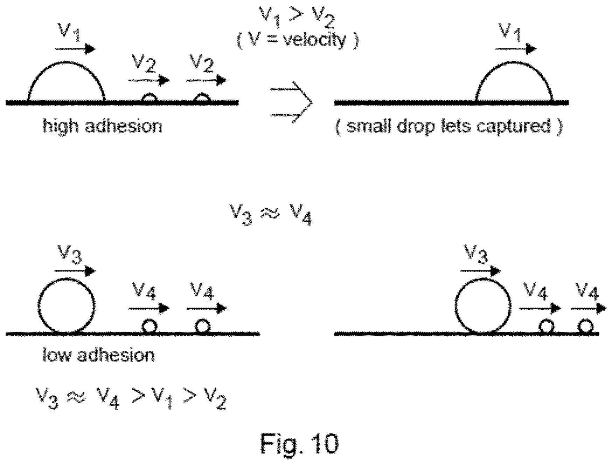

Fig. 10 shows an example of droplet movement across the newly developed disc as it rotates and as liquid is applied. As shown, with high adhesion the smaller droplets acquire a lower relative velocity compared to the larger droplets, leading to the larger droplets capturing the smaller droplets. Furthermore, due to centripetal forces there is a change in velocity of the liquid as the liquid moves outward from the centre of the disc. This causes a break up of the liquid, which is a function of radial distance, radial velocity, and film thickness versus surface tension, and by having a low adhesion concentric ring adjacent to an inner high adhesion area helps to control the break up of the droplets. Also, by having an outer concentric ring at the outer edge of the disc provides for optimum loading of the disc ready for atomization via serrated edges.

While the invention has been illustrated and described in detail in the drawings and foregoing description, such illustration and description are to be considered illustrative or exemplary and not restrictive. The invention is not limited to the disclosed embodiments. Other variations to the disclosed embodiments, which are within the scope of the claims, can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality.

## Claims

1. A disc (10) for a spinning liquid disc atomizer:
wherein
a surface (20) of the disc comprises a plurality of concentric rings (30) having different radii centred on the centre of the disc; and
**characterized in that**
a first concentric ring (40) of an adjacent pair of concentric rings has a surface configured to exhibit a first level of adhesion to a liquid and a second concentric ring (50) of the adjacent pair of concentric rings has a surface configured to exhibit a second level of adhesion to the liquid, and wherein the first level of adhesion is less than the second level of adhesion.

2. Disc according to claim 1, wherein the surface of the disc comprises a centre disc area (60), wherein a maximum radius of the centre disc area is less than a minimum radius of the plurality of concentric rings.

3. Disc according to claim 2, wherein the centre disc area has a surface configured to exhibit the second level of adhesion to the liquid.

4. Disc according to any of claims 2-3, wherein the first concentric ring is adjacent to the centre disc area.

5. Disc according to any of claims 1-4, wherein the plurality of concentric rings comprises three or more concentric rings, and wherein the level of adhesion alternates between the first level and second level of adhesion for adjacent concentric rings progressing in an outwards direction.

6. Disc according to any of claims 1-5, wherein a concentric ring adjacent to an outer edge of the disc has a surface configured to exhibit the second level of adhesion to the liquid.

7. Disc according to any of claims 1-6, wherein the first level of adhesion is provided by a hydrophobic surface.

8. Disc according to any of claims 1-7, wherein the second level of adhesion is provided by a hydrophilic surface.

9. Disc according to any of claims 1-8, wherein the first level of adhesion is provided by a surface that is intentionally textured.

10. Disc according to any of claims 1-9, wherein the second level of adhesion is provided by a surface that is intentionally textured.

11. Disc according to any of claim 1-10, wherein an outer edge (70) of the disc comprises serrations (80).

12. A spray unit (100), comprising:
- an axle (110);
- a disc (10) according to any of claims 1-11; and
- a liquid applicator (120);
wherein, the disc is configured to spin about the axle centred on the centre of the disc; and
wherein, the liquid applicator is configured to apply liquid to a surface of the disc.

13. A spray vehicle (200), comprising at least one disc (10) according to any of claims 1-11.

14. A spray vehicle (300), comprising at least one spray unit (100) according to claim 12.

## Patentansprüche

1. Scheibe (10) für einen Rotationsscheiben-Flüssigkeitszerstäuber, wobei
eine Oberfläche (20) der Scheibe eine Vielzahl von konzentrischen Ringen (30) mit verschiedenen Radien, die auf die Mitte der Scheibe zentriert sind, aufweist; und
**dadurch gekennzeichnet, dass**
ein erster konzentrischer Ring (40) eines benachbarten Paars von konzentrischen Ringen eine Oberfläche aufweist, die dafür gestaltet ist, ein erstes Haftungsniveau für eine Flüssigkeit aufzuweisen, und ein zweiter konzentrischer Ring (50) des benachbarten Paars von konzentrischen Ringen eine Oberfläche aufweist, die dafür gestaltet ist, ein zweites Haftungsniveau für die Flüssigkeit aufzuweisen, und wobei das erste Haftungsniveau kleiner als das zweite Haftungsniveau ist.

2. Scheibe gemäß Anspruch 1, wobei die Oberfläche der Scheibe einen mittleren Scheibenbereich (60) umfasst, wobei ein größter Radius des mittleren Scheibenbereichs kleiner als ein kleinster Radius der Vielzahl von konzentrischen Ringen ist.

3. Scheibe gemäß Anspruch 2, wobei der mittlere Scheibenbereich eine Oberfläche aufweist, die dafür gestaltet ist, das zweite Haftungsniveau für die Flüssigkeit aufzuweisen.

4. Scheibe gemäß einem der Ansprüche 2-3, wobei der erste konzentrische Ring zu dem mittleren Scheibenbereich benachbart ist.

5. Scheibe gemäß einem der Ansprüche 1-4, wobei die Vielzahl von konzentrischen Ringen drei oder mehr konzentrische Ringe umfasst und wobei das Haftungsniveau zwischen dem ersten Haftungsniveau und dem zweiten Haftungsniveau für benachbarte konzentrische Ringe in einer Richtung nach außen fortschreitenden abwechselt.

6. Scheibe gemäß einem der Ansprüche 1-5, wobei ein konzentrischer Ring benachbart zu einem Außenrand der Scheibe eine Oberfläche aufweist, die dafür gestaltet ist, das zweite Haftungsniveau für die Flüssigkeit aufzuweisen.

7. Scheibe gemäß einem der Ansprüche 1-6, wobei das erste Haftungsniveau von einer hydrophoben Oberfläche bereitgestellt wird.

8. Scheibe gemäß einem der Ansprüche 1-7, wobei das zweite Haftungsniveau von einer hydrophilen Oberfläche bereitgestellt wird.

9. Scheibe gemäß einem der Ansprüche 1-8, wobei das erste Haftungsniveau von einer Oberfläche, die gewollt texturiert ist, bereitgestellt wird.

10. Scheibe gemäß einem der Ansprüche 1-9, wobei das zweite Haftungsniveau von einer Oberfläche, die gewollt texturiert ist, bereitgestellt wird.

11. Scheibe gemäß einem der Ansprüche 1-10, wobei ein Außenrand (70) der Scheibe Zahnungen (80) umfasst.

12. Sprüheinheit (100), umfassend:
- eine Achse (110);
- eine Scheibe (10) gemäß einem der Ansprüche 1-11; und
- einen Flüssigkeitsaufbringer (120);
wobei die Scheibe dafür gestaltet ist, sich um die Achse zu drehen, die auf die Mitte der Scheibe zentriert ist; und
wobei der Flüssigkeitsaufbringer dafür gestaltet ist, Flüssigkeit auf eine Oberfläche der Scheibe aufzubringen.

13. Sprühfahrzeug (200), umfassend wenigstens eine Scheibe (10) gemäß einem der Ansprüche 1-11.

14. Sprühfahrzeug (300), umfassend wenigstens eine Sprüheinheit (100) gemäß Anspruch 12.

## Revendications

1. Disque (10) pour un atomiseur de liquide à disque rotatif dans lequel :
une surface (20) du disque comprend une pluralité d'anneaux concentriques (30) ayant des rayons différents centrés sur le centre du disque ; et
**caractérisé en ce que**
un premier anneau concentrique (40) d'une paire adjacente d'anneaux concentriques a une surface configurée pour présenter un premier niveau d'adhérence pour un liquide et un deuxième anneau concentrique (50) de la paire adjacente d'anneaux concentriques a une surface configurée pour présenter un deuxième niveau d'adhérence pour le liquide, et dans lequel le premier niveau d'adhérence est inférieur au deuxième niveau d'adhérence.

2. Disque selon la revendication 1, dans lequel la surface du disque comprend une zone centrale de disque (60), dans lequel un rayon maximal de la zone centrale de disque est inférieur à un rayon minimal de la pluralité d'anneaux concentriques.

3. Disque selon la revendication 2, dans lequel la zone centrale de disque a une surface configurée pour présenter le deuxième niveau d'adhérence pour le liquide.

4. Disque selon l'une quelconque des revendications 2 et 3, dans lequel le premier anneau concentrique est adjacent à la zone centrale de disque.

5. Disque selon l'une quelconque des revendications 1 à 4, dans lequel la pluralité d'anneaux concentriques comprend au moins trois anneaux concentriques, et dans lequel le niveau d'adhérence alterne entre le premier niveau et le deuxième niveau d'adhérence pour des anneaux concentriques adjacents en progressant dans une direction allant vers l'extérieur.

6. Disque selon l'une quelconque des revendications 1 à 5, dans lequel un anneau concentrique adjacent à un bord extérieur du disque a une surface configurée pour présenter le deuxième niveau d'adhérence pour le liquide.

7. Disque selon l'une quelconque des revendications 1 à 6, dans lequel le premier niveau d'adhérence est fourni par une surface hydrophobe.

8. Disque selon l'une quelconque des revendications 1 à 7, dans lequel le deuxième niveau d'adhérence est fourni par une surface hydrophile.

9. Disque selon l'une quelconque des revendications 1 à 8, dans lequel le premier niveau d'adhérence est fourni par une surface qui est intentionnellement texturée.

10. Disque selon l'une quelconque des revendications 1 à 9, dans lequel le deuxième niveau d'adhérence est fourni par une surface qui est intentionnellement texturée.

11. Disque selon l'une quelconque des revendications 1 à 10, dans lequel un bord extérieur (70) du disque comprend des dentelures (80).

12. Unité de pulvérisation (100), comprenant :
- un axe (110) ;
- un disque (10) selon l'une quelconque des revendications 1 à 11 ; et
- un applicateur de liquide (120) ;
dans laquelle le disque est configuré pour tourner autour de l'axe centré sur le centre du disque ; et
dans laquelle l'applicateur de liquide est configuré pour appliquer un liquide à une surface du disque.

13. Véhicule de pulvérisation (200), comprenant au moins un disque (10) selon l'une quelconque des revendications 1 à 11.

14. Véhicule de pulvérisation (300), comprenant au moins une unité de pulvérisation (100) selon la revendication 12.
